# EUROPEAN PATENT SPECIFICATION

(11) **EP 2 419 236 B1**
(45) Date of publication and mention of the grant of the patent: **10.07.2013**
(21) Application number: 10723771.1
(22) Date of filing: 11.05.2010
(51) Int. Cl.: B23K 9/10, B23K 9/16, B23K 9/32, B23K 37/00, B08B 15/04

(54) **POWER SOURCE FOR AND METHOD OF WELDING WITH FUME EXTRACTOR FOR PROVIDING FILTERED COOLING AIR TO ELECTRICAL COMPONENTS IN THE POWER SOURCE**
STROMQUELLE UND VERFAHREN ZUM SCHWEISSEN MIT RAUCHABSAUGUNG ZUR BEREITSTELLUNG VON GEFILTERTER KÜHLLUFT FÜR ELEKTRISCHE BAUTEILE IN DER STROMVERSORGUNG
SOURCE D'ALIMENTATION POUR SOUDAGE ET PROCÉDÉ DE SOUDAGE À EXTRACTEUR DE FUMÉE DESTINÉ À FOURNIR DE L'AIR DE REFROIDISSEMENT FILTRÉ À DES COMPOSANTS ÉLECTRIQUES DANS LA SOURCE D'ALIMENTATION

(30) Priority: 11.05.2009 US 463720
(43) Date of publication of application: 22.02.2012
(73) Proprietor: Lincoln Global, Inc., City of Industry, CA 91748 (US)
(72) Inventor: COLE, Stephen, R., University Heights, OH 44118 (US)
(74) Representative: GROSSE SCHUMACHER KNAUER VON HIRSCHHAUSEN
(86) International application number: PCT/IB2010/001077
(87) International publication number: WO 2010/131095

(56) References cited:
- DE-A1- 3 909 256
- DE-A1- 4 238 564
- DE-C1- 3 606 308
- JP-A- 7 266 052
- JP-A- 2002 186 817
- US-A- 4 496 823

## Description

The present disclosure relates to a power source for welding and welding method according to the preamble of claims 1 and 8 (see, for example, DE 36 06 308 C1). More particularly, the disclosure and inventions relate to fume extraction during welding operations.

### Background of the Disclosure

Every welding operation, whether manual such as stick welding or automated such as robotic welding, produces welding fumes, particles and other airborne soot, dirt and debris. Fume extraction systems have been designed to remove the welding fumes and other airborne residue from the vicinity of the welding site. Fume extraction systems filter the airborne fumes and residue and exhaust the filtered air into the ambient environment. Known fume extraction systems are stand alone systems, meaning that they are built and operate independently of the welding system.
DE 36 06 308 C1 discloses a power source for welding and a welding method, wherein a housing is provided containing the electrical components and the suction/filtering system, the housing having openings for expelling the surface of filtered air coming out from the suction/expelling means.
DE 42 38 564 A1 describes the use of a sensor to disable the functioning of an electric motor when the conduit sucking in pure air is not connected to the housing of the filtering apparatus providing pure air to the motor to be cooled, or when the pressure is reduced.
DE 39 09 256 A1 describes a welding device having a separate filtering system.

### Summary of the Disclosure

The power source and the welding method according to the present invention are defined in the claims 1 and 8, respectively.

In accordance with an embodiment of one of the inventions presented in this disclosure, a fume extraction system is integrated or combined with a power source used for welding. In an exemplary embodiment, a fume extractor removes welding fumes, a filtration device filters the welding fumes to produce filtered air, and the filtered air cools electrical components of the power source. In another embodiment, a suction device, a filtration device and electrical components of the power source are enclosed by a housing or cover so that filtered exhaust air cools the electrical components. In alternative exemplary embodiments, the suction device may comprise an exhaust fan, a vacuum source or other device that produces sufficient suction to remove welding fumes from the welding site back to the filtration device.
In accordance with another embodiment of one of the inventions presented herein, a welding system may include a welding device, a power source, means for extracting welding fumes from the welding site to produce filtered air, with the filtered air cooling electrical components of the power source. In an exemplary embodiment, the means for extracting welding fumes comprises a suction device, a filtration device and an extraction hose.

The disclosure also contemplates a welding method, with an exemplary embodiment including the steps of generating heat from electrical components during a welding operation, removing welding fumes from a welding site during the welding operation, filtering the removed welding fumes to produce filtered air, and using the filtered air to cool the electrical components.

According to the present invention, the apparatus and method disclosed herein include verifying that the filtration device is installed and operational, indicating when a filtration device needs replacement or maintenance, and inhibiting a welding operation when the filtration device is missing or not operational. As another alternative option, a welding operation may be inhibited when the fume extractor is not on. Another alternative option is to only run the fume extractor during a welding operation, and still further optionally to keep the fume extractor running for a period of time after a welding operation is stopped.

These and other aspects, embodiments and advantages of the inventions disclosed herein will be understood by those skilled in the art from the following detailed description of the exemplary embodiments in view of the accompanying drawings.

### Brief Description of the Drawings

Fig. 1 is a simplified functional block diagram of a welding system in accordance with one or more of the inventions described herein, including a subassembly of a power source in accordance with one or more of the inventions described herein;

Fig. 2 is a more detailed embodiment of a welding system such as exemplified in Fig. 1;

Fig. 3 is a detailed illustration of a power source in accordance with one or more of the inventions herein shown in partially exploded isometric; and

Fig. 4 is a flow chart for exemplary methods and control functions of the present inventions, and as also may be used with the exemplary apparatus herein.

### Description of the Exemplary Embodiments

While the various inventions are described herein with reference to specific embodiments, such illustrations and descriptions are intended to be exemplary in nature and not as the only embodiments. For example, an embodiment of a power source is illustrated, but many different power source designs may be used, as modified for an integrated or combined fume extractor as described herein. Also, while a manual welding system is illustrated, the inventions will find application for automatic welding systems and robotic welding systems. The inventions may be used with stick welding, MIG, TIG, submerged arc and other welding technologies as needed. The inventions are directed to a welding system as well as a subassembly of a power source for a welding system.

While various inventive aspects, concepts and features of the inventions may be described and illustrated herein as embodied in combination in the exemplary embodiments, these various aspects, concepts and features may be used in many alternative embodiments, either individually or in various combinations and sub-combinations thereof. Unless expressly excluded herein all such combinations and sub-combinations are intended to be within the scope of the present inventions. Still further, while various alternative embodiments as to the various aspects, concepts and features of the inventionssuch as alternative materials, structures, configurations, methods, circuits, devices and components, software, hardware, control logic, alternatives as to form, fit and function, and so on--may be described herein, such descriptions are not intended to be a complete or exhaustive list of available alternative embodiments, whether presently known or later developed. Those skilled in the art may readily adopt one or more of the inventive aspects, concepts or features into additional embodiments and uses within the scope of the present inventions even if such embodiments are not expressly disclosed herein. Additionally, even though some features, concepts or aspects of the inventions may be described herein as being a preferred arrangement or method, such description is not intended to suggest that such feature is required or necessary unless expressly so stated. Still further, exemplary or representative values and ranges may be included to assist in understanding the present disclosure, however, such values and ranges are not to be construed in a limiting sense and are intended to be critical values or ranges only if so expressly stated. Moreover, while various aspects, features and concepts may be expressly identified herein as being inventive or forming part of an invention, such identification is not intended to be exclusive, but rather there may be inventive aspects, concepts and features that are fully described herein without being expressly identified as such or as part of a specific invention, the inventions instead being set forth in the appended claims. Descriptions of exemplary methods or processes are not limited to inclusion of all steps as being required in all cases, nor is the order that the steps are presented to be construed as required or necessary unless expressly so stated.

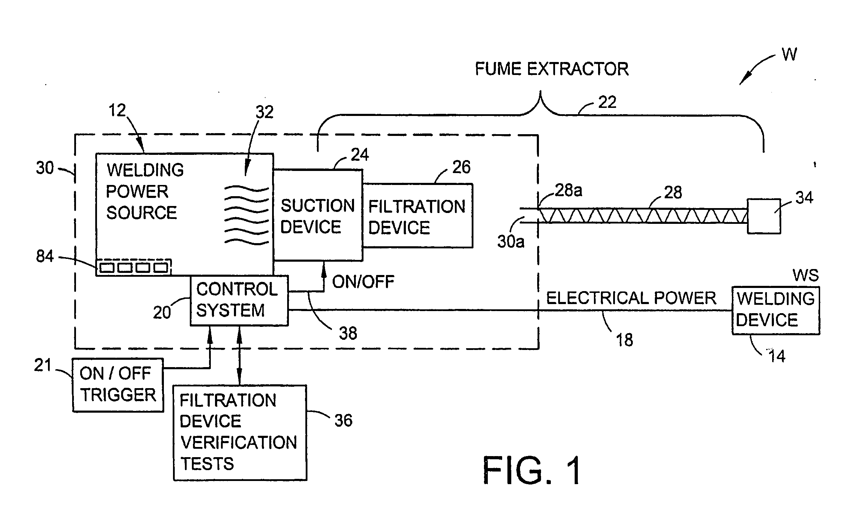

With reference to Fig. 1, an embodiment of the invention herein of a welding system 10 is illustrated. A typical welding system 10 includes an electrical power source 12 which delivers voltage and current to a welding device 14. The welding device 14 may be realized with any of the numerous known designs of manual welding devices such as may be used for stick welding, or non-consumable wire welders such as TIG welders, and consumable wire welders such as MIG welders, whether presently known or those later developed. The welding device 14 may alternatively be realized in the form of an automatic welding system, submerged arc welding system or a robotic welding system, all of which are well known to those skilled in the art. The particular welding system used with the present inventions is a matter of design choice with the available number of choices far too numerous to list or describe herein, and the specific operation and design of the power source 12 and the welding device 14 need not be described herein to understand and practice the present inventions. An exemplary power source and welding device system is the POWER MIG^{®} 350MP available from The Lincoln Electric Company, Cleveland, Ohio.

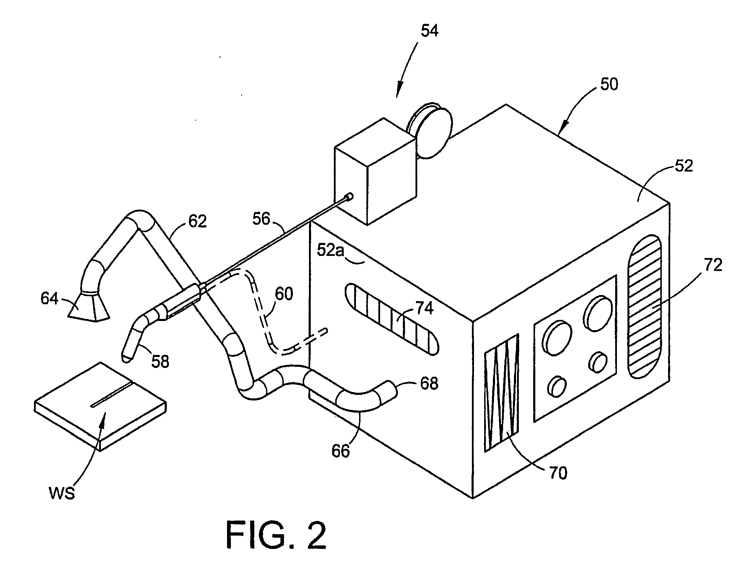

The welding device 14 receives electrical power via a power cable 18. As is well known, for stick welding and TIG welding the welding device 14 may include an electrode holder and a cable 18 that conducts electrical power from the power source 12 to the electrode holder. For MIG welding the cable 18 provides a guide for the consumable wire electrode which is fed through the cable from a wire feeder (see Fig. 2). The power source 12 typical includes a control system 20 that regulates voltage and current and executes other control functions for a welding operation, as is well known. A trigger or switch mechanism 21 may be provided that is actuated by the welder to indicate a demand for output power from the power source.

In accordance with the exemplary embodiment of Fig. 1, a fume extractor 22 is integrated into or combined with a power source 12. Exactly which elements of the fume extractor 22 are fully integrated into the power source 12 is a matter of design choice, but in accordance with the invention, the fume extractor 22 and the power source 12 are preferably combined in such a way that filtered air produced by the fume extractor 22 is used to help cool electrical components of the power source 12 which generate substantial amounts of heat during welding operations.

The fume extractor 22 may be realized in the form of a suction generating device 24, a filtration device 26 and an extraction device 28, which are an exemplary embodiment of a means for extracting or removing welding fumes from the welding site. According to the present invention, the suction device 24 and the filtration device 26 are disposed in a housing that also encloses the electrical components of the power source 12. The form of the enclosure 30 is a matter of design choice, and may be realized as a single housing or may be realized as a housing that has multiple compartments. A salient feature of the housing 30 would be structural air volume so that the filtered air that flows from the filtration device 26 flows within the enclosure 30 in such a manner that the filtered air helps cool the electrical components of the power source 12. It is important to note that the filtered air need not be the only source of cooling air for the power source 12, it being understood according to the present invention that the housing 30 includes vents or openings that permit additional cooling air to be drawn into the housing 30 interior to help cool the electrical components of the power source 12. But in accordance with the inventive concepts herein, the filtered air from the fume extractor 22 also is used to help cool the electrical components of the power source 12.

The suction device 24 may be realized in many different forms, and in one embodiment may be realized in the form of an exhaust fan that generates sufficient suction to remove airborne welding fumes, and may also remove soot, dirt or other airborne debris from the welding site WS via the extraction device 28, and to pull air through the filtration device 26 so as to produce filtered air. Alternatively, the suction device 24 may be realized in the form of a vacuum suction device, such as are used with some stand alone fume extraction systems. It is contemplated that in the preferred embodiments, the suction device 24 is disposed in the housing 30 so that only a single suction device is needed to generate cooling air for the electrical components. Power sources today typically have an internal cooling fan to generate an air flow to help cool the electrical components, but such fans would not generate sufficient air flow to remove welding fumes from the welding site WS, particularly when the extraction device 28 may be quite lengthy and removal of the welding fumes may require a large air flow. The suction device 24 could thus be used to generate sufficient filtered air flow and optionally additional air flow to not only remove the welding fumes but also to cool the electrical components, so that only a single suction device 24 would be needed.

The filtration device 26 may be realized in the form of any filter arrangement that may be used to filter welding fumes and other airborne dirt and debris from the welding site WS. Such filters are well known to those skilled in the art and are available, for example, from The Lincoln Electric Company, Cleveland, Ohio.

The extraction device 28 may be realized in many different forms, including an extraction hose 28 such as is well known to those skilled in the art, and are available, for example, from The Lincoln Electric Company, Cleveland, Ohio. The outlet or exhaust end 28a of the extraction hose 28 is coupled to an inlet or opening 30a of the housing 30. This allows the suction device 24 to draw air and welding fumes into the filtration device 26 so as to produce a flow of filtered air 32 that may be used to help cool the electrical components of the power source 12. The extraction hose 28 may include a nozzle or hood 34 as is well known, or may simply be realized as the inlet end of the hose, much like a vacuum cleaner hose.

As will be more fully described hereinafter, the control system 20, according to the present invention, also used to check the operational status and health of the filtration device as represented by control function box 36, and to also control whether welding operations are enabled or inhibited based on the status of the suction device 24 via a control line 38, the filtration device 26 or other control criteria.

With reference next to Fig. 2, an exemplary embodiment of one or more of the inventions herein is illustrated, in this case being realized with a MIG-type manual welding system, and in phantom a stick welding system. The power source 50 includes a housing, according to the present invention, that encloses the electrical components (not shown in Fig. 2) of the power source 50. A wire feeder 54 provides a supply of consumable electrode wire 56 to the electrode holder 58 as is well known and may be of conventional design. For stick welding systems, the wire feeder 54 is not needed, and an electrical cable 60 may be used to connect electrical power from the power source 50 to the electrode holder 58, as is also well known to those skilled in the art.

An extraction hose 62, which in this example may include an extraction hood 64 at the inlet end of the extraction hose, may be a flexible hose such that the inlet end 64 can be positioned near the welding site WS so as to remove welding fumes and other airborne debris from the welding site during a welding operation. The outlet end 66 of the extraction hose 62 is connected by a suitable clamp or other arrangement to an opening 68 in the housing 52, just upstream or in front of a filtration device 70. The filtration device 70 is preferably disposed within the housing 52, although the housing may be somewhat more complex, and for example, may have a filter compartment mounted on a wall of the housing. Whether the housing 52 is viewed as a single enclosure body (such as a simple cover, for example) or a compartmentalized enclosure is not critical to practice the present inventions, it being understood that the filtration device 70 need only be disposed in such a manner that filtered air drawn through the filtration device enters the power source 50 interior so as to help cool the electrical components therein. Although not illustrated in Fig. 2, a suction device such as an exhaust fan or vacuum source may be disposed in the housing 52 so as to create a sufficient suction to remove welding fumes from the welding site WS, draw the air and welding fumes into the filtration device 70 and exhaust the filtered air into the interior of the power source 50 so as to help cool the electrical components therein. As an alternative but less preferred embodiment, the suction device may be disposed outside the housing 30, for example on top of the housing, provided that the filtered air is drawn into the housing 30 to help cool the electrical components.

The housing 52 may include exhaust vents 72 as needed to allow air to be vented from the housing 52. The housing, according to the present invention, includes additional openings 74 to allow more cooling air into the power source 50 other than just from the extraction hose 62. Preferably although not required, any additional cooling air drawn into the housing 52 may also be filtered by the filtration device 70. Accordingly, the additional openings 74 are disposed in the housing walls, such as forward wall 52a, in such a manner that air entering such openings will be filtered by the filtration device 70. To the extent that the additional openings 74 may be used, the openings 74 may be appropriately sized to ensure sufficient air flow through the fume extractor so that the suction device will be able to remove the welding fumes from the weld site WS. As another alternative, the openings 74 may be realized in the form of variable inlet vents that can be adjusted either manually or automatically to control the inlet flow of additional air into the housing. The variable openings may be adjusted as needed as part of an overall setup procedure based on the type of filtration device being used, the required air flow for the fume extractor and so on.

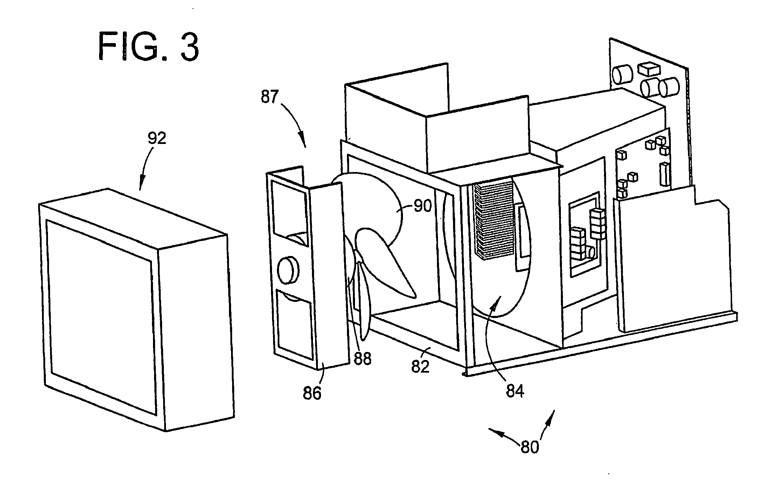

With reference to Fig. 3, in a more specific illustration, a power source 80 is illustrated with the housing omitted so as to show a typical interior layout of a welding power source. The power source 80 may include a frame 82 that supports a wide variety of electrical components 84 which can generate significant heat during use. An exhaust fan bracket 86 is mountable to the frame 82 by any suitable means such as screws, for example. The fan bracket 86 supports an exhaust fan 87 having an exhaust fan motor 88, which may be any suitable electric motor, and which drives a series of fan blades 90. These fan blades 90, when rotated at high speed, create an air flow and suction that pulls air and welding fumes into the power source 80 interior via an extraction device, such as an extraction hose 62 of Fig. 2 for example. A filtration device 92 is disposed proximate and upstream the exhaust fan 87 so that the welding fumes are filtered and removed from the air flow. The filtered air flow circulates within the structural volume of the power source to help cool the electrical components 84.

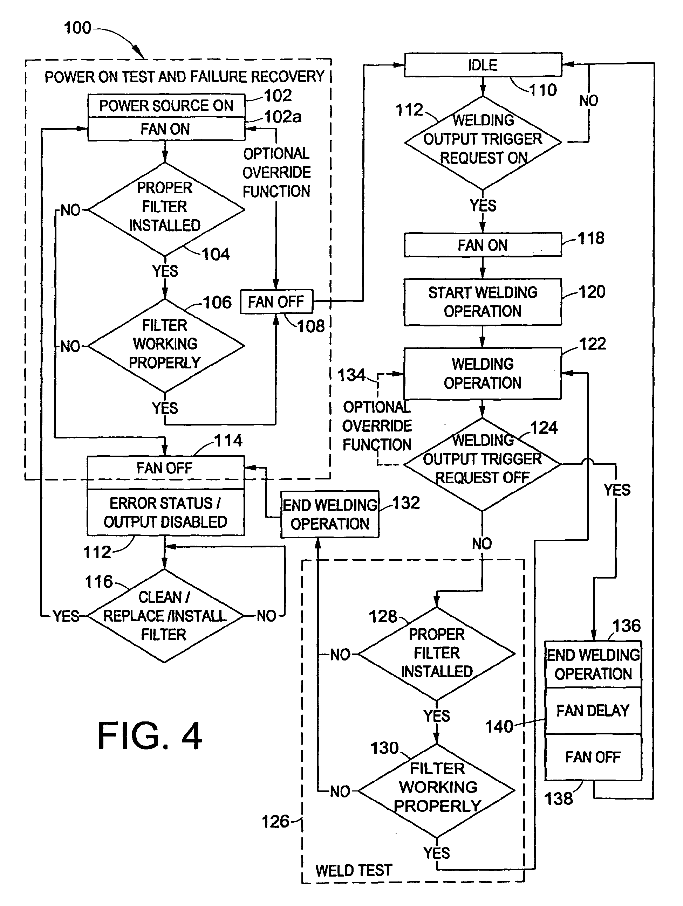

Turning next to Fig. 4, an exemplary control sequence for the control system 20 is provided. Any number of the tests and decision points may be considered optional based on the needs of a particular system. But having the fume extractor function incorporated into the power source 12 increases the flexibility and use of a fume extractor as compared to prior systems in which the fume extractor was a standalone system. In this embodiment, an optional Power On Test and Failure Recovery routine 100 may be used as a pre-check of the fume extraction process at initial power on, for example at the beginning of a shift or after power has been off.

At step 102 the power source 12 is turned on. This step may automatically turn on the suction device 24 (as at step 102a) such as the exhaust fan 87, or the operator may turn the suction device on using a separate switch (not shown) installed on the housing 52. As another alternative, the suction device 24 may turn on only when a trigger or switch associated with the welding device is activated by a welder when a welding operation will be performed. At step 102 the control system 20 checks that the exhaust fan 87 is turned on and if not, waits until the exhaust fan is turned on or provides an alert that the exhaust fan is not running.

With the suction device 24 turned on, at steps 104 and 106 the control system 20 checks one or more parameters to verify that the filtration device 26 is the correct filter for the welding operation, that the filtration device 26 is not clogged and is operational, and that the filtration device is properly installed. Parameters that may be used include checking air flow rates and or pressure, as is known by those skilled in the art.

If after steps 104 and 106 it is determined that the correct filtration device 26 is installed and operational then at step 108, the suction device 24 may be turned off and the system put into an idle mode at step 110 to await the welding operator indicating a welding operation is beginning by actuating a welding output trigger request. A manual override step 111 may be used if it is desired to bypass the filter tests 104, 106.

If after steps 104 and 106 it is determined that there is a problem with the filtration device 26 or it is not installed, the system bypasses to a loop to activate an indicator at step 112 that the filtration device 26 needs replacement, maintenance, is improperly installed or is the wrong filtration device. This indicator may be an audible alarm, a visual lamp or other visual indicator, and so on. The suction device 24 may also be turned off at 114 since the operator will likely need to open the housing 30 to access the filtration device 26. At step 116 the operator performs the required task for the filtration device, and the system may loop back to step 102a to verify the suction device 24 is turned on and that the filtration device now is operational.

At step 112, the system remains in idle mode until the welder actuates the trigger device 21 to indicate a welding output demand from the power source 12. When the trigger 21 is actuated at step 112, the exhaust fan may be turned on at step 118 and a welding operation started at step 120. During welding at step 122, with the trigger 21 still active at step 124, the system may branch into a Weld Test sub-loop 126 to check that the filtration device is still installed and operational at steps 128 and 130. If the fume extractor 22, and particularly the filtration device 26, is not operating properly, the system may automatically end the welding operation as at step 132, and returns to step 114 to turn the suction device off, indicate an error status at step 112 and require the operator to take the needed action at step 116 before returning to step 102a to begin a new sequence. Alternatively, an optional override function 134 may be used at step 124 to bypass the filtration device tests during a welding operation as sometimes it is undesirable to shutdown in the middle of a welding operation.

At step 124, when the trigger is released the welding operation is stopped at step 136. At the end of a welding operation at step 136, the control system 20 may automatically turn off the suction device 24 at step 138. This may occur for example, when the welder releases the welding device trigger 21. This may be used to minimize energy consumption, for example, similar to having the suction device off at step 108 while the system waits for a welding operation signal.. An optional intermediate step 140 may be used, however, to impose a delay for a period of time from the end of a welding operation until the suction device 24 is turned off. This delay 140 may allow extra time for cooling the power source or enable extended air filtration from the welding site after a welding operation is completed. The optional delay may also be controlled as a function of how long the welding operation lasted. For example, if the power source was on for a longer period of time, the cooling off delay may be extended, and alternatively if the welding operation was shorter, the delay could be shorter or even bypassed. The system then loops back to step 110 to idle the system and have the suction device 24 activated for the next welding operation.

The inventions thus provide method and power source for incorporating a fume extractor system and function into a power source for a welding system, in which the exhaust filtered air is used to help cool electrical components of the power source. This integration provides additional control functions to assure that the fume extractor is operational prior to a welding operation.

The inventive aspects have been described with reference to the exemplary embodiments. Modification and alterations will occur to others upon a reading and understanding of this specification. It is intended to include all such modifications and alterations insofar as they come within the scope of the appended claims

**Reference numbers:**

| | |
|---|---|
| 10 | welding system |
| 12 | electrical power source |
| 14 | welding device |
| 18 | power cable |
| 20 | control system |
| 21 | switch mechanism |
| 22 | fume extractor |
| 24 | suction generating device |
| 26 | filtration device |
| 28 | extraction device |
| 28a | exhaust end |
| 30 | enclosure |
| 30a | opening |
| 32 | filtered air |
| 34 | hood |
| 36 | control function box |
| 38 | control line |
| 50 | power source |
| 52 | enclosure |
| 52a | forward wall |
| 54 | wire feeder |
| 56 | electrode wire |
| 58 | electrode holder |
| 60 | electrical cable |
| 62 | extraction hose |
| 64 | extraction hood |
| 66 | outlet end |
| 68 | opening |
| 70 | filtration device |
| 72 | exhaust vents |
| 74 | additional openings |
| 80 | power source |
| 82 | frame |
| 84 | electrical components |
| 86 | exhaust fan bracket |
| 87 | exhaust fan |
| 88 | exhaust fan motor |
| 90 | fan blades |
| 92 | filtration device |
| 100 | failure recovery routine |
| 102 | step |
| 102a | step |
| 104 | step |
| 106 | step |
| 108 | step |
| 110 | step |
| 111 | manual override step |
| 112 | step |
| 114 | step |
| 116 | step |
| 118 | step |
| 120 | step |
| 122 | step |
| 124 | step |
| 126 | Weld Text sub-loop |
| 128 | step |
| 130 | step |
| 132 | step |
| 134 | optional override function |
| 136 | step |
| 138 | step |
| 140 | optional intermediate step |

## Claims

1. Power source (12) for welding, comprising:
electrical components that generate heat during a welding operation,
a fume extractor (22) that removes welding fumes from a welding site during a welding operation, wherein said fume extractor (22) comprises a suction device (24) that creates suction that removes the welding fumes,
a filtration device (26) for filtering the welding fumes to produce filtered air and preferably comprising one or more filters,
a housing that encloses the electrical components, the filtration device (28) and then suction device (24), **characterised by**
a control system (20, 36) for checking the operational status and health of said filtration device (26) and for controlling whether welding operations are enabled or inhibited based on the status of the filtration device (26),
wherein the housing comprises openings (74) disposed in the housing walls (52a), to allow cooling air to be sucked into the power source (50) by the suction device (24) other than from the fume extractor (22), so that
said filtered air and cooling air cools said electrical components.

2. The power source of claim 1 wherein said fume extractor (22) comprises an extraction hose having an inlet end positional near the welding site, and an outlet end that directs the welding fumes into said filtration device.

3. The power source of claim 2 wherein the suction device (24) comprises an exhaust fan that draws air and the welding fumes through said extraction hose and through said filtration device (28), said exhaust fan exhausting filtered air to cool said electrical components.

4. The power source of one of the claims 1 to 3 , wherein the openings (74) are variable Inlet vents.

5. The power source of one of the claims 1 to 4 wherein said control system (20) controls delivery of electrical energy to a welding device at the welding site, said control system inhibiting a welding operation when said fume extractor Is off and/or when said filtration device is not installed.

6. The power source of claim 5 wherein said control system (20) keeps said fume extractor on for a period of time after a welding operation is completed and/or only during a welding operation.

7. The power source of claim 5 or 6 wherein said control system (20) monitors pressure or air flow for said filtration device to determine when said filtration device needs maintenance or replacement.

8. A welding method, comprising:
generating heat from electrical components during a welding operation,
removing welding fumes from a welding site during the welding operation by means of a suction device (24),
filtering the removed welding fumes to produce filtered air,
using the suction device to suck additional cooling air through opening (74) in a housing wall (52a) of a housing, the housing enclosing the electrical components,
the filtration device (26) and the suction device (24), **characterized by** the steps of :
using the filtered air and the cooling air to cool, the electrical components, in particular during a welding operation and/or for a time period after a welding operation is stopped,
preventing a welding operation except when welding fumes will be removed;
verifying a filter needs maintenance or replacement or to be installed prior to starting a welding operation; monitoring air flow or pressure to determine health of a filtration device used for said filtering step.

9. The welding method of claim 8, comprising adjusting the openings (74) in the housing wall (52a) to control the inlet flow of additional cooling air into the housing.

10. A welding system (10) with the power source according to one of claims 1 to 7 comprising:
a welding device (14) for welding a workpiece at a welding site,
wherein the power source provides electrical energy to said welding device (14) during a welding operation.

11. The welding system (10) of dalm 11 wherein said fume extractor (22) further comprises an exhaust fan and an extraction hose.

12. The welding system (10) of claim 10 or 11 wherein the control means (20, 36) is also for controlling operation of the welding device (14) as a function of performance of said fume extractor (22).

13. The welding system (10) of claim 12 wherein said control means (20, 36) inhibits a welding operation when said fume extractor (22) is non-operational.

14. The welding system (10) of one of the claims 10 to 13 wherein the housing encloses an exhaust fan.

## Patentansprüche

1. Stromquelle (12) zum Schweißen, umfassend:
elektrische Komponenten, die während einer Schweißoperation Wärme erzeugen,
einen Rauchabsauger (22), der Schweißrauch vom Schweißort während einer Schweißoperation entfernt, wobei der Rauchabsauger (22) eine Absaugvorrichtung (24) umfasst, die eine Saugwirkung erzeugt, welche Schweißrauch entfernt,
eine Filtrationsvorrichtung (26) zum Filtern des Schweißrauchs, um gefilterte Luft zu erzeugen, die vorzugsweise ein oder mehrere Filter umfasst,
ein Gehäuse, das die elektrischen Komponenten, die Filtrationsvorrichtung (28) und die Absaugvorrichtung (24) umschließt, **gekennzeichnet durch**
ein Kontrollsystem (20, 36) zum Kontrollieren des Betriebszustandes und der Intaktheit der Filtrationsvorrichtung (26) und zum Kontrollieren auf der Basis des Status der Filtrationsvorrichtung (26), ob Schweißoperationen aktiviert oder deaktiviert sind,
wobei das Gehäuse Öffnungen (74) umfasst, die in den Gehäusewänden (52a) angeordnet sind, damit Kühlluft in die Stromversorgung (50) **durch** eine andere Absaugvorrichtung (24) als den Rauchabsauger (22) gesaugt werden kann, so dass gefilterte Luft und Kühlluft die elektrischen Komponenten kühlen.

2. Stromquelle nach Anspruch 1, wobei der Rauchabsauger (22) einen Extraktionsschlauch umfasst, der ein Einlassende in der Nähe der Schweißstelle und ein Auslassende hat, welcher den Schweißrauch in die Filtrationsvorrichtung lenkt.

3. Stromquelle nach Anspruch 2, wobei die Absaugvorrichtung (24) einen Abluftventilator umfasst, der Luft und den Schweißrauch durch den Extraktionsschlauch und durch die Filtrationsvorrichtung (26) zieht, wobei der Abluftventilator gefilterte Luft zum Kühlen der elektrischen Komponenten absaugt.

4. Stromquelle nach einem der Ansprüche 1 bis 3, wobei die Öffnungen (74) variable Einlassöffnungen sind.

5. Stromquelle nach einem der Ansprüche 1 bis 4, wobei das Kontrollsystem (20) die Zufuhr von elektrischer Energie zu einer Schweißvorrichtung am Schweißort steuert, wobei das Kontrollsystem eine Schweißoperation verhindert, wenn der Rauchabsauger aus ist und/oder wenn die Filtrationsvorrichtung nicht installiert ist.

6. Stromquelle nach Anspruch 5, wobei das Kontrollsystem (20) den Rauchabsauger für eine Zeitperiode weiterlaufen lässt, nachdem eine Schweißoperation abgeschlossen ist und/oder nur während einer Schweißoperation.

7. Stromquelle nach Anspruch 5 oder 6, wobei das Kontrollsystem (20) den Druck oder den Luftstrom für die Filtrationsvorrichtung überwacht, um festzustellen, wann die Filtrationsvorrichtung Wartung oder Auswechselung benötigt.

8. Schweißverfahren, umfassend:
Erzeugung von Wärme von elektrischen Komponenten während einer Schweißoperation,
Entfernen von Schweißrauch von einem Schweißort während der Schweißoperation mittels einer Absaugvorrichtung (24).
Filtern des entfernten Schweißrauchs, um gefilterte Luft zu erzeugen,
Verwenden der Absaugvorrichtung zum Ansaugen von zusätzlicher Kühlluft durch Öffnungen (74) in einer Gehäusewand (52a) eines Gehäuses, wobei das Gehäuse die elektrischen Komponenten, die Filtrationsvorrichtung (26) und die Absaugvorrichtung (24) einschlleßt,
**gekennzeichnet durch** die folgenden Schritte:
Verwenden der gefilterten Luft und der Kühlluft zum Kühlen der elektrischen Komponenten, insbesondere während einer Schweißoperation und/oder für eine Zeitdauer nach dem Beenden der Schweißoperation,
Verhindern einer Schweißoperation, außer wenn Schweißrauch entfernt wird;
Überprüfen, ob ein Filter Wartung oder Auswechselung benötigt oder vor dem Beginn einer Schweißoperation installiert werden soll;
Überwachen des Luftstroms oder Drucks, um die Intaktheit einer Filtrationsvorrichtung festzustellen, die für den Filterschritt verwendet wird.

9. Schweißverfahren nach Anspruch 8, das das Einstellen der Öffnungen (74) in der Gehäusewand (52a) umfasst, um den Einlassstrom von zusätzlicher Kühlluft In das Gehäuse zu steuern.

10. Schweißsystem (10) mit der Stromquelle nach einem der Ansprüche 1 bis 7, umfassend:
eine Schweißvorrichtung (14) zum Schweißen eines Werkstücks an einem Schweißort,
wobei die Stromquelle für elektrische Energie für die Schweißvorrichtung (14) während einer Schweißoperation sorgt.

11. Schweißsystem (10) nach Anspruch 11, wobei der Rauchabsauger (22) ferner einen Abluftventilator und einen Extraktionsschlauch umfasst.

12. Schweißsystem (10) nach Anspruch 10 oder 11, wobei das Kontrollmittel (20, 36) auch zur Kontrolle des Betriebs der Schweißvorrichtung (14) als Funktion der Arbeit des Rauchabsaugers (22) dient.

13. Schweißsystem (10) nach Anspruch 12, wobei das Kontrollmittel (20, 36) eine Schweißoperation verhindert, wenn der Rauchabsauger (20, 36) nicht einsatzbereit ist.

14. Schweißsystem (10) nach einem der Ansprüche 10 bis 13, wobei das Gehäuse einen Abluftventilator umschließt.

## Revendications

1. Source d'alimentation électrique (12) pour soudage, comprenant :
des composants électriques qui génèrent de la chaleur au cours d'une opération de soudage,
un extracteur de fumée (22) qui enlève la fumée de soudage d'un site de soudage au cours d'une opération de soudage, dans laquelle ledit extracteur de fumée (22) comprend un dispositif d'aspiration (24) qui crée une aspiration qui enlève la fumée de soudage,
un dispositif de filtration (26) pour filtrer la fumée de soudage afin de produire de l'air filtré et comprenant de préférence un ou plusieurs filtres,
un boîtier qui renferme les composants électriques, le dispositif de filtration (26) et le dispositif d'aspiration (24),
**caractérisée par** un système de commande (20, 36) pour contrôler l'état de fonctionnement et la santé dudit dispositif de filtration (26) et pour commander si des opérations de soudage sont permises ou interdites sur la base de l'état du dispositif de filtration (26),
dans laquelle le boîtier comprend des ouvertures (74) disposées dans les parois de boîtier (52a) pour permettre à de l'air de refroidissement d'être aspiré dans la source d'alimentation électrique (50) par le dispositif d'aspiration (24) autrement qu'à partir de l'extracteur de fumée (22), de sorte que ledit air filtré et ledit air de refroidissement refroidissent lesdits composants électriques.

2. Source d'alimentation électrique selon la revendication 1, dans laquelle ledit extracteur de fumée (22) comprend un tuyau d'extraction ayant une extrémité d'entrée positionnée à proximité du site de soudage, et une extrémité de sortie qui dirige la fumée desoudage dans ledit dispositif de filtration.

3. Source d'alimentation électrique selon la revendication 2, dans laquelle le dispositif d'aspiration (24) comprend un ventilateur d'évacuation qui tire de l'air et la fumée de soudage à travers ledit tuyau d'extraction et à travers ledit dispositif de filtration (26), ledit ventilateur d'évacuation évacuant l'air filtré pour refroidir lesdits composants électriques.

4. Source d'alimentation électrique selon l'une quelconque des revendications 1 à 3, dans laquelle les ouvertures (74) sont des évents d'entrée variables.

5. Source d'alimentation électrique selon l'une quelconque des revendications 1 à 4, dans laquelle ledit système de commande (20) commande la livraison d'énergie électrique à un dispositif de soudage au site de soudage, ledit système de commande interdisant une opération de soudage lorsque ledit extracteur de fumée est arrêté et/ou lorsque ledit dispositif de filtration n'est pas installé.

6. Source d'alimentation électrique selon la revendication 5, dans laquelle ledit système de commande (20) maintient ledit extracteur de fumée en fonctionnement pendant une période de temps après qu'une opération de soudage est terminée et/ou uniquement au cours d'une opération de soudage.

7. Source d'alimentation électrique selon la revendication 5 ou 6, dans laquelle ledit système de commande (20) surveille la pression ou le débit d'air dudit dispositif de filtration pour déterminer quand ledit dispositif de filtration a besoin d'une maintenance ou d'un remplacement.

8. Procédé de soudage, comprenant :
la génération de chaleur à partir de composants électriques au cours d'une opération de soudage,
l'enlèvement de la fumée de soudage d'un site de soudage au cours de l'opération de soudage au moyen d'un dispositif d'aspiration (24),
la filtration de la fumée de soudage enlevée pour produire de l'air filtré,
l'utilisation du dispositif d'aspiration pour aspirer de l'air de refroidissement supplémentaire à travers une ouverture (74) dans une paroi de boîtier (52a) d'un boîtier, le boîtier renfermant les composants électriques, le dispositif de filtration (26) et le dispositif d'aspiration (24),
**caractérisé par** les étapes de :
l'utilisation de l'air filtré et de l'air de refroidissement pour refroidir les composants électriques, en particulier au cours d'une opération de soudage et/ou pendant une période de temps après qu'une opération de soudage est arrêtée,
l'interdiction d'une opération de soudage sauf lorsque la fumée de soudage est enlevée ;
la vérification si un filtre a besoin d'une maintenance ou d'un remplacement ou d'être Installé avant de commencer une opération de soudage ;
la surveillance du débit ou de la pression d'air pour déterminer l'état d'un dispositif de filtration utilisé pour ladite étape de filtration.

9. Procédé de soudage selon la revendication 8, comprenant l'ajustement des ouvertures (74) dans la paroi de boîtier (52a) pour commander le débit d'entrée de l'air de refroidissement supplémentaire dans le boîtier.

10. Système de soudage (10) avec la source d'alimentation électrique selon l'une quelconque des revendications 1 à 7, comprenant :
un dispositif de soudage (14) pour souder une pièce d'ouvrage sur un site de soudage,
dans lequel la source d'alimentation électrique fournit une énergie électrique au dit dispositif de soudage (14) au cours d'une opération de soudage.

11. Système de soudage (10) selon la revendication 10, dans lequel ledit extracteur de fumée (22) comprend en outre un ventilateur d'évacuation et un tuyau d'extraction.

12. Système de soudage (10) selon la revendication 10 ou 11, dans lequel le moyen de commande (20, 36) est également destiné à commander le fonctionnement du dispositif de soudage (14) en fonction des performances dudit extracteur de fumée (22).

13. Système de soudage (10) selon la revendication 12, dans lequel ledit moyen de commande (20, 36) interdit une opération de soudage lorsque ledit extracteur de fumée (22) n'est pas opérationnel.

14. Système de soudage (10) selon l'une des *revendications 10 à 13, dans lequel le boîtier renferme un ventilateur d'évacuation.
